# EUROPEAN PATENT SPECIFICATION

(11) **EP 2 371 439 B1**
(45) Date of publication and mention of the grant of the patent: **20.09.2017**
(21) Application number: 11250402.2
(22) Date of filing: 30.03.2011
(51) Int. Cl.: B01D 46/00, B01D 46/24, F01N 3/022

(54) **Plugged honeycomb structure and process for production thereof**
Abgedichtete Wabenstruktur und Herstellungsverfahren dafür
Structure en nid d'abeille raccordée et son procédé de fabrication

(30) Priority: 31.03.2010 JP 2010083028
(43) Date of publication of application: 05.10.2011
(73) Proprietor: NGK Insulators, Ltd., Nagoya-City, Aichi Pref. 467-8530 (JP)
(72) Inventor: Kodama, Suguru, Nagoya City Aichi-ken 467-8530 (JP); Mizutani, Takashi, Nagoya City Aichi-ken 467-8530 (JP)
(74) Representative: Naylor, Matthew John

(56) References cited:
- EP-A2- 2 179 775
- DE-A1-102007 042 821
- JP-A- 9 206 526

## Description

### [Technical Field]

The present invention relates to a honeycomb structure and a process for producing the honeycomb structure. More particularly, the present invention relates to a plugged honeycomb structure having a cut-away portion and a process for producing the honeycomb structure.

### [Background Art]

A ceramic-made honeycomb structure has been used, for example, in a catalyst carrier for giving rise to catalysis in an internal combustion engine, a boiler, a chemical reactor, a reformer for fuel cell, etc., as well as in a filter for capturing fine particles present in an exhaust gas, particularly diesel fine particles, i.e. a diesel particulate filter (this filter is hereinafter referred to as "DPF" in some cases).

A honeycomb structure used for the above-mentioned purposes generally has a plurality of cells which are surrounded by porous partition walls and function as a flow path and, particularly when used as a filter for capture of fine particles, has such a constitution that each cell is plugged at either one end face of honeycomb structure in such a manner that cells adjacent to any one cell plugged at one end face of honeycomb structure are plugged at other end face of honeycomb structure (accordingly, each end face of honeycomb structure shows a checkered pattern). In such a honeycomb structure having such a constitution, a to-be-treated fluid enters cells not plugged at the inlet side end face of honeycomb structure, that is, cells plugged at the outlet side end face of honeycomb structure; passes through porous partition walls and enters adjacent cells, i.e. cells plugged at the inlet side end face and not plugged at the outlet side end face; and is discharged therefrom. In this case, the partition walls function as a filter and, when the honeycomb structure is used, for example, as DPF, particulate matter (hereinafter referred to as "PM" in some cases) such as soot, discharged from a diesel engine is captured by the partition walls and deposits thereon.

In diesel engine, a honeycomb structure such as mentioned above is ordinarily provided in the exhaust gas flow line located downstream of the engine, as DPF, and functions so as to allow for the passage of exhaust gas discharged from engine and purify the exhaust gas. In this case, solids (e.g. rust peeled from the inner wall of flow line, welding chip and dust entering the flow line during fitting) and a liquid (e.g. condensed water), both carried from the upstream side of exhaust gas, collide, together with the exhaust gas, with the inner wall of gas flow line or with the honeycomb structure provided in the flow line, at a high speed, which may cause the breakage of the inner wall and the honeycomb structure. In particular, solid foreign matter rebounds at the inlet side end face of DPF owing to the vibration of engine, which may cause boring, for example, at the plugged portions of DPF and invites a reduction in capture efficiency. This phenomenon is generally called erosion and has been a big problem from the standpoint of keeping the long-term durability of flow line and honeycomb structure.

To solve the erosion problem, it has been tried to provide a wire net or a baffle on the inner wall of flow path or at the upstream side of honeycomb structure (these places are likely to be broken) to prevent the direct and high-speed collision of foreign matter. However, it has been unable to remove the foreign matter of solid and liquid to a sufficiently low level and secure the long-term durability. That is, there have been cases that the foreign matter carried from the upstream side of exhaust gas flow causes the surface damage of flow path inner wall and the breakage of honeycomb structure. Accordingly, it has been required to reliably remove the foreign matter present in flow path and extend the durability of exhaust gas purification apparatus. In, for example, Patent Document 1, there is disclosed a flow path in which a means for changing the flow direction of exhaust gas and a foreign matter-capturing portion are provided at the upstream side of a honeycomb structure.

### [Prior Art Document]

### [Patent Document]

Patent Document 1: JP-A-9-206526

EP 2 179 775 was filed on 16 October 2009, claiming a priority date of 27 October 2008, and was published on 28 April 2010. The present application was filed on 30 March 2011, claiming a priority date of 31 March 2010.

EP 2 179 775 describes a plugged honeycomb structure for a diesel particulate filter, the plugged honeycomb structure having a plurality of cells functioning as fluid passages separated by partition wall and plugging portions in such a manner that each of adjacent cells is plugged in one end portion on the mutually opposite side; wherein the plugged honeycomb structure has a cutout portion in a part of a fluid passage end portion, and each of predetermined cells constituting the cutout portion is plugged as well in a passage end portion; and a method for manufacturing the plugged honeycomb structure. The plugged honeycomb structure can have a desired end portion shape according to the purpose and application.

### [Summary of the Invention]

### [Problems to Be Solved by the Invention]

In the exhaust gas flow path disclosed in the Patent Document 1, the means for changing the flow direction of exhaust gas directs the flow of exhaust gas toward the periphery of flow path and the pocket-shaped, foreign matter-capturing portion provided on the inner wall of flow path, having a opening directed toward the upstream side of exhaust gas captures the foreign matter present in exhaust gas physically; thereby, the erosion problem caused by rebounding of foreign matter in flow path is alleviated effectively. However, the flow path of exhaust gas need be designed long in the flow direction of exhaust gas, which inevitably makes large the whole exhaust gas purification apparatus. Further, when the pocket is provided with no change in flow path diameter, the sectional area of flow path becomes smaller and the pressure loss increases, which may reduce the output of engine; when the pocket is provided with an increase in flow path diameter, the sectional area of flow path becomes larger and the body height of vehicle need be increased in order to secure the minimum height from ground when the flow path is mounted beneath the body floor. Considering that the space for mounting on vehicle body is limited, it is desired to design the exhaust gas purification apparatus in a size as small as possible. In this respect, the flow path disclosed in the Patent Document 1 has not been sufficient.

The present invention has been made in view of the above-mentioned problems of prior art. The present invention provides a plugged honeycomb structure which is used in an exhaust gas purification apparatus satisfactory in both erosion suppression and size, which is minimized in the reduction in purification ability and strength, caused by processing for shaping, and which is superior in raw material yield and cost, and a process for producing such a honeycomb structure.

The present inventors made a study in order to achieve the above-mentioned problem. As a result, it was considered that, when, in a plugged honeycomb structure having a plurality of cells (surrounded by porous partition walls and functioning as a flow path) and having such a constitution that each two adjacent cells are plugged at either one end face of honeycomb structure in such a manner that one of the cells is plugged at one end face of honeycomb structure and the other cell is plugged at other end face of honeycomb structure (accordingly, each end face of honeycomb structure shows a checkered pattern), a cut-away portion is formed at the fluid inlet side end face of honeycomb structure and the particular cells forming the cut-away portion are plugged even at the inlet side end face, the cut-away portion suppresses erosion effectively and space saving corresponding to the volume of cut-away portion is obtained. The present inventors made a further study on problems such as strength reduction, reduction in regeneration limit and pressure loss increase, which are believed to arise from the formation of cut-away portion in plugged honeycomb structure. As a result, it was considered that the above problems can be alleviated by, in a plugged honeycomb structure of bonded type obtained by integrally bonding a plurality of honeycomb segments via bonding material layers, forming a cut-away portion composed of one entire honeycomb segment by a combination of a short segment and long segments and extending the bonding material layers bonding the short segment and the long segments adjacent to the short segment, to the inlet side end face of the long segments. The present invention has been completed based on these considerations. Hence, the present invention provides a plugged honeycomb structure having a desired end shape, which has sufficient purification ability and strength, and a process for producing such a honeycomb structure; that is, a plugged honeycomb structure and a process for producing the honeycomb structure, both described below.
[1] A plugged honeycomb structure for diesel particulate filter, formed by integrally bonding, via bonding material layers, a plurality of honeycomb segments each having a plurality of cells surrounded by porous partition walls and functioning as a flow path, in which honeycomb segments each two adjacent cells are plugged at either one end face of honeycomb segment in such a way that one of the cells is plugged at one end face of honeycomb segment and the other cell is plugged at other end face of honeycomb segment, in which honeycomb structure,
   of the plurality of honeycomb segments, a particular honeycomb segment is constituted so that its axial direction length is shorter than the axial direction length of residual honeycomb segments, whereby a cut-away portion composed of one entire honeycomb segment is formed at the periphery of the inlet side end face of the plugged honeycomb structure,
   the bonding material layers which bond the particular honeycomb segment of short segment and the residual honeycomb segments of long segments adjacent to the short segment are formed so as to be continuously present from the inlet side end face of short segment to the inlet side end face of long segments,
   in the bonding material layers bonding the short segment and the adjacent long segments, T1 which is the bonding material layer thickness at the inlet side end face of the short segment, T2 which is the bonding material layer thickness at the inlet side end face of the adjacent long segments, and T which is the bonding material layer thickness from the inlet side end face of the short segment to the inlet side end face of the adjacent long segments satisfy T1 ≧T≧T2, 0.5 mm≦T1≦5 mm, and 1.5≦T1/T2≦30, and
   the difference L between the axial direction length of short segment and the axial direction length of long segments satisfies 5 mm≦L≦35 mm.
[2] The plugged honeycomb structure according to [1], wherein the T is reduced gradually from the inlet side end face of short segment toward the inlet side end face of long segments and thereby the plane of the bonding material layer contacting with the cut-away portion forms an inclined plane.
[3] The plugged honeycomb structure according to [1] or [2], wherein the inclined plane has a flat shape free from concave or convex or a shape which is concave toward the direction of long segments.
[4] A process for producing a plugged honeycomb structure set forth in any of [1] to [3], which comprises
   a step for formation of honeycomb segments laminate, of laminating and bonding a honeycomb segment to be converted to the short segment and the long segments via the bonding material layers to obtain a honeycomb segments laminate,
   a step for periphery processing, of processing the periphery of the honeycomb segments laminate, and
   a step for formation of cut-away portion, of cutting a portion to become a cut-away portion of the honeycomb segment to be converted to the short segment and part of the bonding material layers in contact with the portion to become a cut-away portion, to form a cut-away portion;
   wherein the step for formation of the cut-away portion is performed such that the bonding material layers which bond the particular honeycomb segment of short segment and the residual honeycomb segments of long segments adjacent to the short segment are formed so as to be continuously present from the inlet side end face of short segment to the inlet side end face of long segments;
   and such that in the bonding material layers bonding the short segment and the adjacent long segments, T1 which is the bonding material layer thickness at the inlet side end face of the short segment, T2 which is the bonding material layer thickness at the inlet side end face of the adjacent long segments, and T which is the bonding material layer thickness from the inlet side end face of the short segment to the inlet side end face of the adjacent long segments satisfy T1≧T≧T2, 0.5 mm≦T1≦5 mm, and 1.5≦T1/T2≦30, and
   the difference L between the axial direction length of short segment and the axial direction length of long segments satisfies 5 mm≦L≦35 mm.

The plugged honeycomb structure of the present invention can have a desired cut-away portion at the fluid inlet side end face. Further, with the process for producing a plugged honeycomb structure, according to the present invention, there can be reduced problems during production, of breakage and strength reduction, and problems during use, of reduction in regeneration limit, pressure loss, etc.

### [Brief Description of the Drawings]

Fig. 1 is a perspective view schematically showing an embodiment of the conventional plugged honeycomb structure.
Fig. 2 is a perspective view schematically showing other embodiment of the conventional plugged honeycomb structure.
Fig. 3 is a perspective view schematically showing an embodiment of the plugged honeycomb structure of the present invention.
Fig. 4A is a partially-enlarged sectional view schematically showing an embodiment of the plugged honeycomb structure of the present invention.
Fig. 4B is a partially-enlarged sectional view schematically showing other embodiment of the plugged honeycomb structure of the present invention.
Fig. 4C is a partially-enlarged sectional view schematically showing still other embodiment of the plugged honeycomb structure of the present invention.
Fig. 4D is a partially-enlarged sectional view schematically showing a comparative example of the plugged honeycomb structure of the present invention.
Fig. 4E is a partially-enlarged sectional view schematically showing other comparative example of the plugged honeycomb structure of the present invention.
Fig. 5A is a sectional view schematically showing a state in which an exhaust gas enters the plugged honeycomb structure shown in Fig. 4A.
Fig. 5B is a sectional view schematically showing a state in which an exhaust gas enters the plugged honeycomb structure shown in Fig. 4B.
Fig. 5C is a sectional view schematically showing a state in which an exhaust gas enters the plugged honeycomb structure shown in Fig. 4C.
Fig. 5D is a sectional view schematically showing a state in which an exhaust gas enters the plugged honeycomb structure shown in Fig. 4D.
Fig. 5E is a sectional view schematically showing a state in which an exhaust gas enters the plugged honeycomb structure shown in Fig. 4E.
Fig. 6A is a sectional view schematically showing an embodiment of the exhaust gas purification apparatus having the plugged honeycomb structure of the present invention mounted thereon.
Fig. 6B is a sectional view schematically showing other embodiment of the exhaust gas purification apparatus having the plugged honeycomb structure of the present invention mounted thereon.
Fig. 6C is a sectional view schematically showing still other embodiment of the exhaust gas purification apparatus having the plugged honeycomb structure of the present invention mounted thereon.
Fig. 7 is a fragmentary sectional view in axial direction schematically showing a plugged honeycomb structure in which the portion to be cut away is not cut and remains.
Fig. 8 is a fragmentary sectional view in axial direction schematically showing a plugged honeycomb structure in which the portion to be cut away has been cut and removed.
Fig. 9 is a view schematically showing a step of piling up honeycomb segments.
Fig. 10 is a perspective view schematically showing an embodiment of the honeycomb segments laminate.
Fig. 11 is a schematic front view of en embodiment of the plugged honeycomb structure of the present invention when viewed from the direction of formation of cut-away portion.
Fig. 12 is a schematic front view of other embodiment of the plugged honeycomb structure of the present invention when viewed from the direction of formation of cut-away portion.

### [Mode for Carrying Out the Invention]

The mode for carrying out the present invention is described below with referring to the accompanying drawings. The present invention is not restricted to the following embodiments, and changes, modifications and improvements may be added thereto unless there is no deviation from the scope of the present invention.

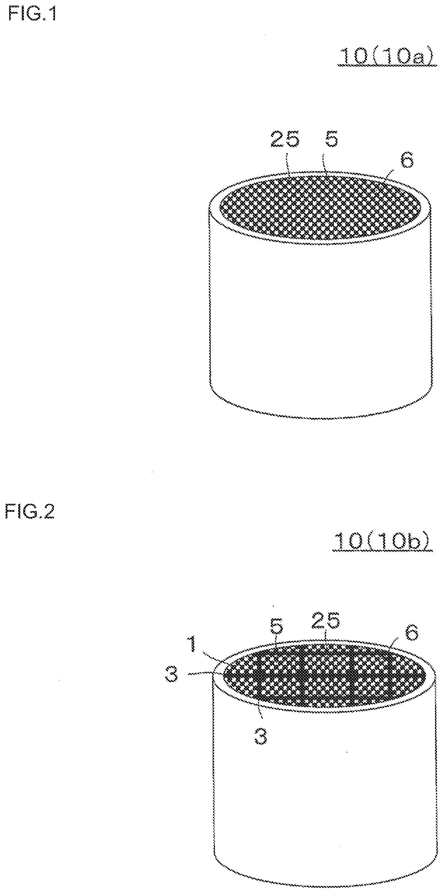

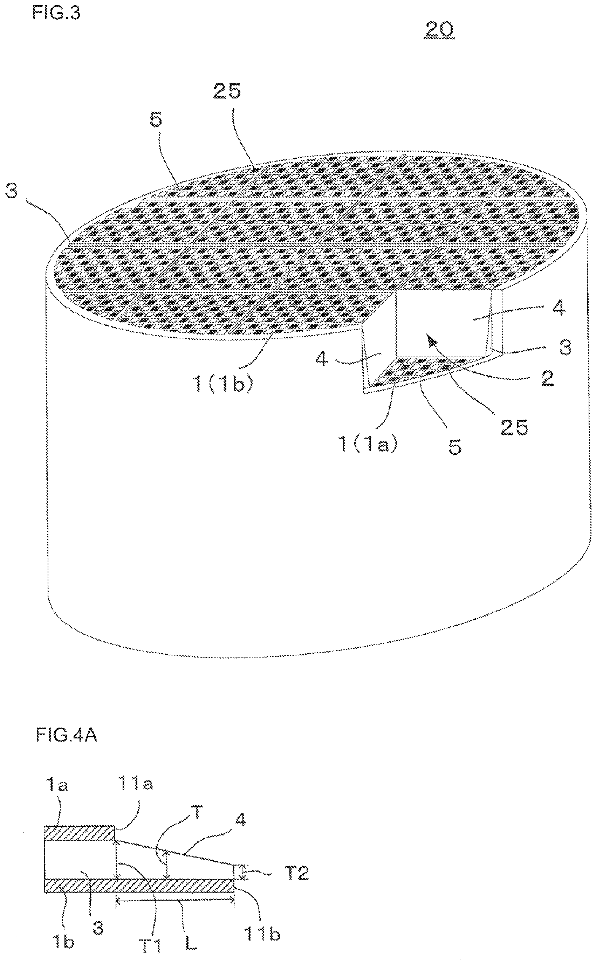

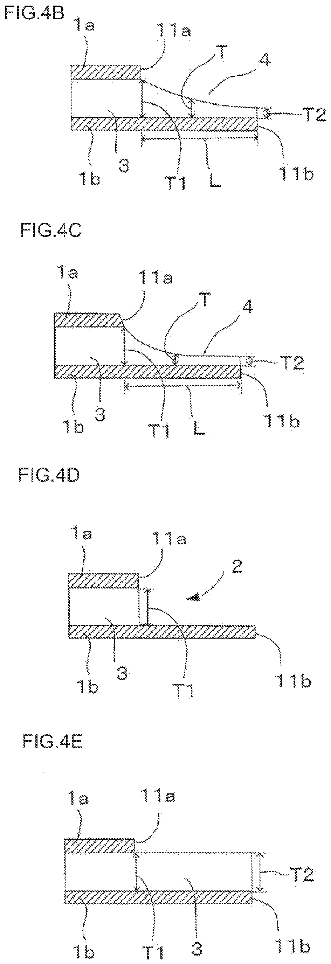

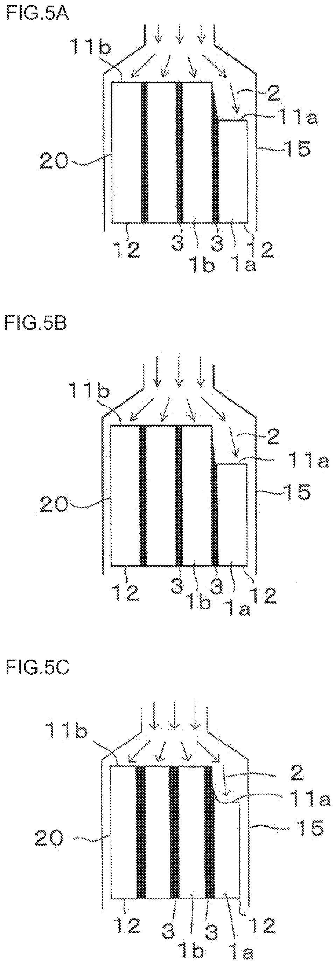

Fig. 1 and Fig. 2 are each a perspective view schematically showing an embodiment of the conventional plugged honeycomb structure. Fig. 3 is a perspective view schematically showing an embodiment of the plugged honeycomb structure of the present invention. Fig. 4A is a partially-enlarged sectional view schematically showing an embodiment of the plugged honeycomb structure of the present invention; Fig. 4B is a partially-enlarged sectional view schematically showing other embodiment of the plugged honeycomb structure of the present invention; Fig. 4C is a partially-enlarged sectional view schematically showing still other embodiment of the plugged honeycomb structure of the present invention; Fig. 4D is a partially-enlarged sectional view schematically showing a comparative example of the plugged honeycomb structure of the present invention; and Fig. 4E is a partially-enlarged sectional view schematically showing other comparative example of the plugged honeycomb structure of the present invention. Fig. 5A to Fig. 5E are, respectively, sectional views schematically showing a state in which an exhaust gas enters the plugged honeycomb structures shown in Fig. 4A to Fig. 4E.

As the plugged honeycomb structure used as DPF in the exhaust gas purification apparatus, there have been used cylindrical plugged honeycomb structures 10 having neither concave nor convex on the end faces of axial direction. Examples thereof are a plugged honeycomb structure 10a shown in Fig. 1, which is integrally formed so as to have a desired shape and which has a plurality of cells 5 (surrounded by porous partition walls 6 and functioning as a flow path), these cells being plugged (having a plugged portion 25) at either one end face thereof in such a way that one cell is plugged at one end face and cells adjacent thereto are plugged at other end face; and a plugged honeycomb structure 10b shown in Fig. 2, which is formed by integrally bonding (so as to have a desired shape), via bonding material layers 3, a plurality of honeycomb segments each having a plurality of cells 5 (surrounded by porous partition walls 6 and functioning as a flow path), these cells being plugged (having a plugged portion 25) at either one end face thereof in such a way that one cell is plugged at one end face and cells adjacent thereto are plugged at other end face.

Meanwhile, the plugged honeycomb structure of the present invention is, as shown in Fig. 3, a plugged honeycomb structure 20 for diesel particulate filter, formed by integrally bonding, via bonding material layers 3, a plurality of honeycomb segments 1 each having a plurality of cells 5 (surrounded by porous partition walls 6 and functioning as a flow path), in which honeycomb segments each two adjacent cells are plugged at either one end face of honeycomb segment in such a way that one of the cells is plugged at one end face of honeycomb segment and the other cell is plugged at other end face of honeycomb segment, in which honeycomb structure 20, of the plurality of honeycomb segments 1, a particular honeycomb segment 1 is constituted so that its axial direction length is shorter than the axial direction length of residual honeycomb segments 1, whereby a cut-away portion 2 composed of one entire honeycomb segment is formed at the periphery of the inlet side end face of the plugged honeycomb structure. In this case, the bonding material layers 3 which bond the particular honeycomb segment 1 (short segment 1a) and the residual honeycomb segments 1 (long segments 1b) adjacent to the short segment 1a are formed so as to be continuously present from the inlet side end face 11a of short segment 1a to the inlet side end face 11b of long segments 1b. Further, the plugged honeycomb structure 20 of the present invention is constituted, as shown in Figs. 4A to 4C, in such a way that, in the bonding material layers 3 bonding the short segment 1a and the adjacent long segments 1b, T1 (which is the bonding material layer thickness at the inlet side end face 11a of the short segment 1a), T2 (which is the bonding material layer thickness at the inlet side end face 11b of the adjacent long segments 1b), and T (which is the bonding material layer thickness from the inlet side end face 11a of the short segment 1a to the inlet side end face 11b of the adjacent long segments 1b) satisfy T1≧T≧T2. That is, the plugged honeycomb structure 20 of the present invention is constituted in such a way that the long segments 1b surrounding the cut-away portion 2 are covered by bonding materials layers 3 with their outer walls not exposed to the cut-away portion 2 and that, with respect to the thickness T of the bonding material layers 3, T is not larger than T1 and T2 is smaller than T1.

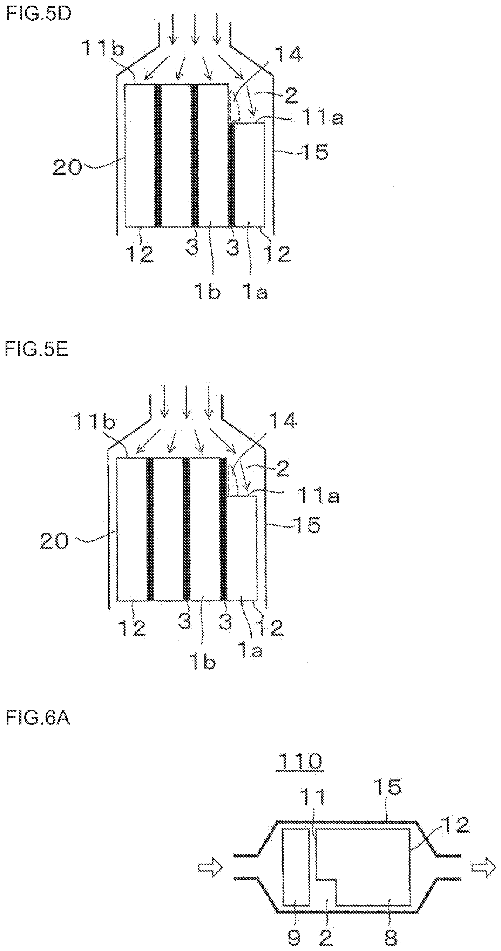

When, as shown in, for example, Fig. 4D and Fig. 5D, the outer peripheries of long segments 1b are exposed to the cut-away portion 2, the exposed portions of long segments 1b may be damaged by the foreign matter contained in exhaust gas and sufficient suppress for erosion may not be obtained. Further, during the regeneration of honeycomb structure, the difference in thermal expansion between short segment 1a and adjacent long segments 1b produces a tensile stress at the bonding interface may cause, for example, the rupture at the bonding interface or cracking in the vicinity of bonding material layers. Further, ordinarily, an exhaust gas hardly reaches the corner 14 of cut-away portion and a turbulent flow of exhaust gas is generated around the corner 14; as a result, a pressure loss is invited, the amount of exhaust gas entering each cell is not uniform among individual cells, the deposition amount of PM on partition walls varies among individual partition wall, thereby the thermal stress during regeneration is unevenly distributed, which may invite cracking. Therefore, it is necessary that bonding material layers 3 are continuously present from the inlet side end face 11a of short segment 1a to the inlet side end face 11b of long segments 1b; by employing such constitution, erosion is suppressed more highly, and the bonding area between short segment 1a and long segments 1b can be made large and a high bonding strength can be obtained.

Also, when, as shown in Fig. 4E and Fig. 5E, the bonding material layers 3 bonding the short segment 1a and the adjacent long segments 1b are continuously present to the inlet side end face 11b of long segments 1b and the T1 (which is the bonding material layer thickness at the inlet side end face 11a of short segment 1a) and the T2 (which is the bonding material layer thickness at the inlet side end face 11b of adjacent long segments 1b) are the same, problems such as reduction in erosion suppression and generation of tensile stress at bonding interface are solved; however, as in the case of Fig. 4D and Fig. 5D, problems such as pressure loss increase and reduction in regeneration limit, caused by generation of turbulent flow of exhaust gas remain undissolved. Therefore, the bonding material layers 3 need be constituted so that the thickness satisfies T1>T2. By employing such constitution, the inflow of exhaust gas can be made smooth and the generation of turbulent flow can be allowed to takes place hardly.

The plugged honeycomb structure 20 of the present invention is constituted so that the T1 satisfies 0.5 mm≦T1≦5 mm. A T1 of smaller than 0.5 mm is not preferred because the bonding material layers 3 covering the outer periphery walls of the long segments 1b surrounding the cut-away portion 2 are too thin and the suppression of erosion may not be sufficient. A T1 of larger than 5 mm is not preferred because the bonding material layers 3 are too thick, the opening areal ratio of whole honeycomb structure is relatively small, and the pressure loss may be too large.

Further, the plugged honeycomb structure 20 of the present invention is constituted so that the T1 and the T2 satisfy 1.5≦T1/T2≦30. A T1/T2 of smaller than 1.5 is not preferred because the inclination of the inclined plane 4 is small, therefore, the inflow of exhaust gas into cut-away portion 2 is unlikely to be smooth, the generation of turbulent flow is not prevented sufficiently, and the pressure loss may be too large. Also, a T1/T2 of larger than 30 is not preferred because the T2 is too small and, therefore, the bonding strength between long segments 1b and bonding material layers 3 may not be sufficient. Incidentally, the value of T1/T2 is more preferably 2.0≦T1/T2≦10.

Further, in the plugged honeycomb structure 20 of the present invention, it is preferred that the difference L between the axial direction length of short segment 1a and the axial direction length of long segments 1b satisfies 5 mm≦L≦35 mm. A L of smaller than 5 mm is not preferred because the space of cut-away portion 2 is small and accordingly the suppression of erosion may not be sufficient. A L of larger than 35 mm, is not preferred because the length of short segment 1a is small relatively and accordingly the bonding strength between short segment 1a and bonding material layers 3 may not be sufficient.

Also, in the plugged honeycomb structure 20 of the present invention, it is more preferred that the thickness of the bonding material layers 3 bonding the short segment 1a and the adjacent long segments 1b decreases gradually from the inlet side end face 11a of short segment 1a to the inlet side end face 11b of adjacent long segments 1b and, thereby, the plane of bonding material layers 3 contacting with cut-away portion 2 forms an inclined plane 4. That is, it is preferred that, as shown in Figs. 4A to 4C, the T decreases continuously under the condition of T1≧T≧T2 without showing, for example, any increase in the middle. When the T increases and decreases between the T1 and the T2 and the increase and decrease is extreme, the smooth inflow of exhaust gas into cut-away portion is prevented and the generation of turbulent flow may not be prevented sufficiently.

It is further preferred that the inclined plane 4 of bonding material layer 3 has a flat shape free from concave or convex as shown in 4A, or a shape which is concave toward the direction of long segment as shown in Fig. 4B and Fig. 4C. When the inclined plane 4 has a shape which is convex toward the direction of cut-away portion and the convex is extreme, the smooth inflow of exhaust gas into cut-away portion is prevented and the generation of turbulent flow may not be prevented sufficiently.

The overall shape of the plugged honeycomb structure 20 of the present invention may be a desired shape (e.g. a cylindrical or oval shape) having a cut-away portion 2 at the fluid inlet side end face of honeycomb structure, which is suitable as a filter for exhaust gas purification. In the plugged honeycomb structure 20 of the present invention, the cut-away portion 2 is formed at a desired position and in a desired size, depending upon the application and purpose of honeycomb structure, and given cells 5 are plugged at the whole area of inlet side end face including the portion to become a cut-away portion 2, that is, at all inlet side end faces of short segment and long segments, and the reduction in purification ability, caused by the processing for shaping is suppressed.

The material for each honeycomb segment 1 constituting the plugged honeycomb structure 20 of the present invention is preferably a ceramic and is preferably at least one member selected from the group consisting of silicon carbide, silicon-silicon carbide composite material, cordierite, mullite, alumina, spinel, silicon carbide-cordierite composite material, lithium aluminum silicate, aluminum titanate, and iron-chromium-aluminum alloy. Particularly in a structure formed by integrally bonding a plurality of honeycomb segments 1 (1a and 1b) via bonding material layers 3, such as the plugged honeycomb structure 20 of the present invention, there is preferred, of the above-mentioned materials, silicon carbide or a silicon-silicon carbide composite material. Silicon carbide has a relatively large thermal expansion coefficient and, accordingly, when used as an aggregate in formation of a large, integral type honeycomb structure, has caused a defect owing to the thermal shock during use. However, in the bonded type honeycomb structure such as of the present invention, the expansion and contraction of silicon carbide in each honeycomb segment 1 is absorbed by the bonding material layers 3, whereby the generation of defect in honeycomb structure can be prevented.

As the material for bonding material layers 3, there can be used a slurry obtained by dispersing a filler (e.g. inorganic fiber, colloidal silica, clay, SiC particles, organic binder or foamed resin) in a dispersing agent (e.g. water).

In the exhaust gas purification apparatus 110 shown in Fig. 6A, a plugged honeycomb structure 20 having a cut-away portion 2 is provided as a DPF 8 behind a honeycomb structure 9, in a container 15. In this case, it is preferred that, when the exhaust gas purification apparatus has been fitted to a vehicle body, the DPF 8 is positioned so that the cut-away portion 2 is present at the upstream side of exhaust gas and is directed toward the bottom side of exhaust gas purification apparatus 110 (ground side). The solid or liquid foreign matter carried from the upstream side of exhaust gas moves downward of the exhaust gas purification apparatus 110 owing to the gravity. As a result, damage is concentrated particularly at the bottom position of the inner wall of container 15 and at the inlet side end face 11 of DPF 8. By providing the DPF 8 with the cut-away portion 2 being directed downward, a space for rebounding of foreign matter is secured at the bottom portion of container 15, the frequency of direct collision of foreign matter with the inlet side end face 11 of DPF 8 is reduced, and the impact during collision is lessened. That is, by using the plugged honeycomb structure 20 of the present invention, the degradation of durability caused by erosion can be suppressed even when, unlike in the past, there is provided, in the flow path of exhaust gas purification apparatus, no extra device such as wire net or foreign matter-capturing pocket; and space saving and cost saving in exhaust gas purification apparatus can be achieved.

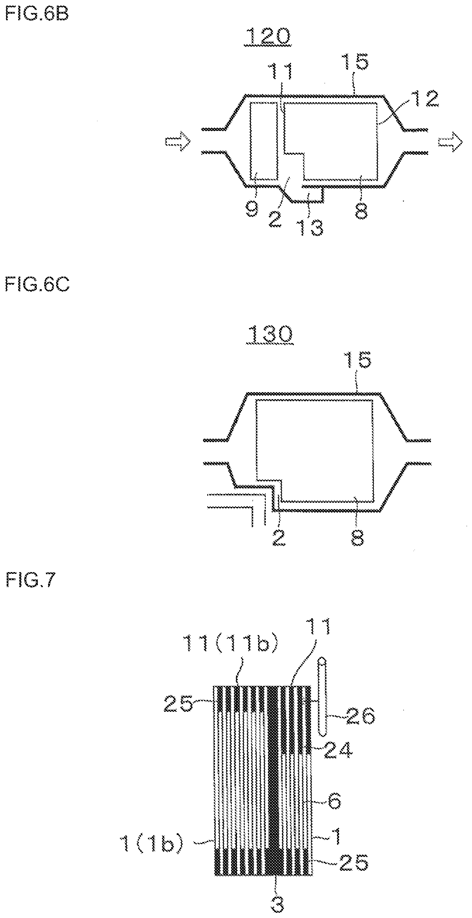

In the exhaust gas purification apparatus 120 shown in Fig. 6B, a plugged honeycomb structure 20 having a cut-away portion 2 is provided as a DPF 8 behind a honeycomb structure 9, in a container 15; there is further provided a foreign matter-capturing pocket 13 in order to capture the foreign matter which is carried from the upstream of purification apparatus together with an exhaust gas and which may damage the DPF 8; the cut-away portion 2 of DPF 8 is allowed to function as a guide for introducing the foreign matter into the foreign matter-capturing pocket 13. By employing such constitution, a major portion of the foreign matter entering the exhaust gas purification apparatus can be recovered in the foreign matter-capturing pocket 13 without collision of foreign matter with inlet side end face 11 of DPF 8. In this case, it is preferred that, when the exhaust gas purification apparatus 120 has been fitted to a vehicle body, the DPF 8 is positioned so that the cut-away portion 2 is present at the upstream side of exhaust gas and is directed toward the bottom side of exhaust gas purification apparatus 120 (ground side), as in the case of the exhaust gas purification apparatus 110 shown in Fig. 6A.

The plugged honeycomb structure 20 of the present invention not only suppresses erosion in a limited space but also has an advantage that it can be used in a container 15 of special shape, as shown in Fig. 6C. When there is a limit in available space as in, for example, vehicle body bottom, it is effective from the standpoint of space saving to design a small exhaust gas purification apparatus and, after mounting it on a vehicle body, leave no dead space in the vicinity of the purification apparatus. Therefore, by, in mounting of exhaust gas purification apparatus on vehicle body, modifying beforehand the shape of container for exhaust gas purification apparatus so as to fit the shape of the space in which the container is to be accommodated, no wasteful space is present and the limited space can be utilized to a maximum extent. To realize it, a honeycomb structure having a shape conforming to the shape of container is necessary and the plugged honeycomb structure 20 of the present invention can be used preferably.

Incidentally, Fig. 6A to Fig. 6C are each a sectional view schematically showing an embodiment of the exhaust gas purification apparatus having the plugged honeycomb structure of the present invention mounted thereon. In Fig. 6A and Fig. 6B, the left side is an exhaust gas inlet side, and the right side is an exhaust gas outlet side.

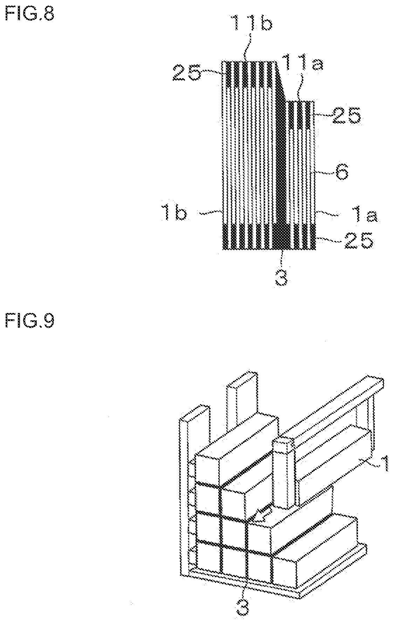

In the plugged honeycomb structure 20 of the present invention, the cut-away portion 2 can be produced by, as shown in Fig. 7 and Fig. 8, bonding a honeycomb segment 1 (to be made into a short segment 1a) with long segments 1 (1b) via bonding material layers 3 and then cutting, in a desired depth and a desired shape, the portion (to be made into a cut-away portion) of the honeycomb segment 1 (to be made into a short segment 1a) and part of the bonding material layers 3 contacting with the portion (to be made into a cutaway portion). Here, the inlet side end face of each long segment 1 (1b) has plugged portions 25 of ordinary depth; however, the inlet side end face of the honeycomb segment 1 (to be made into a short segment 1a) has deep plugged portions 24 of depth larger than that of ordinary-depth plugged portions 25 so that, after the formation of cut-away portion, plugged portions of ordinary depth remain. In other words, the portion (to be made into a plugged portion) is the end face of honeycomb segment, having deep plugged portions. In any of the honeycomb segments 1, each two adjacent cells 5 are plugged at either one end face of honeycomb segment in such a way that one of the cells is plugged at one end face of honeycomb segment and the other cell is plugged at other end face of honeycomb segment; at the outlet end face of the honeycomb segments 1, there is no difference in the depth of plugged portion among honeycomb segments 1, and plugged portions 25 of ordinary depth are formed. Incidentally, Fig. 7 is a fragmentary sectional view in axial direction schematically showing a plugged honeycomb structure in which the portion to be cut away is not cut and remains; and Fig. 8 is a fragmentary sectional view in axial direction schematically showing a plugged honeycomb structure in which the portion to be cut away has been cut and removed.

The process for producing a plugged honeycomb structure 20, according to the present invention comprises
a step for formation of honeycomb segments laminate, of laminating and bonding a honeycomb segment 1 (to be converted to a short segment 1a) and long segments 1b via bonding material layers 3 to obtain a honeycomb segments laminate 30,
a step for periphery processing, of processing the periphery of the honeycomb segments laminate 30, and
a step for formation of cut-away portion, of cutting a portion (to become a cut-away portion) of the honeycomb segment 1 (to be converted to a short segment 1a) and part of the bonding material layers 3 in contact with the portion (to become a cut-away portion), to form a cut-away portion 2.

Specifically explaining, first, a masking tape is attached to one end face (a fluid inlet end face 11) of honeycomb segment 1 after drying, and holes are made, using a laser, only on the portions of tape corresponding to the portions of honeycomb segment in which plugged portions are to be formed. With respect to segments to become long segments 1b, each end face of honeycomb segment 1 to which the tape has been attached, i.e. each inlet side end face is immersed in a plugging slurry of 0.5 to 2.0 mm depth, to form plugged portions 25 of desired depth. With respect to a segment to become a short segment 1a, the inlet side end face of honeycomb segment 1 is immersed in a plugging slurry of given depth, similarly to the case of the segments to become long segments 1b, to form deep plugged portions 24. In this case, the depth of the plugging slurry in which a segment(s) is (are) immersed, can be appropriately determined depending upon the desired depth of the cut-away portion 2 of plugged honeycomb structure 20. In any of the honeycomb segments 1, a masking tape is attached also to the other end face (fluid outlet end face 12) so that each two adjacent cells 5 are plugged at either one end face of honeycomb segment in such a way that one of the cells is plugged at one end face of honeycomb segment and the other cell is plugged at other end face of honeycomb segment; holes are made, using a laser, only on the portions of tape corresponding to the portions of honeycomb segment in which plugged portions are to be formed; and the outlet side end face of honeycomb segment is immersed in a plugging slurry of 0.5 to 2.0 mm depth, to form plugged portions 25 of desired depth.

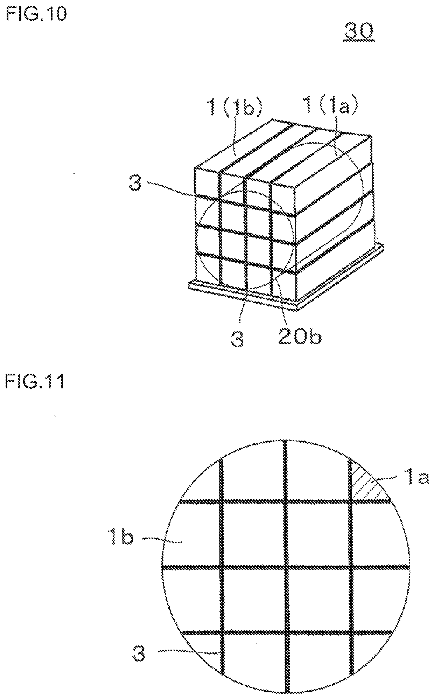

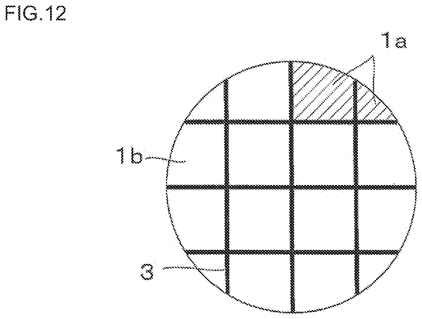

Then, the individual honeycomb segments 1 obtained are laminated in a combination of desired number of honeycomb segments, via bonding material layers 3 and are bonded so that all the segments 1 are uniform at the two end faces, followed by pressurization and drying, to obtain a honeycomb segments laminate 30 (see Fig. 9 and Fig. 10). In this case, it is preferred that, in order to form a cut-away portion 2 for suppression of erosion, the honeycomb segment 1 (to become a short segment 1a) is positioned at a corner of the honeycomb segments laminate 30 so that a cut-away portion 2 is formed at a corner of honeycomb structure 20b (see Fig. 11). When a cut-away portion 2 is formed by a plurality of short segments 1a, it is preferred that a plurality of honeycomb segments 1 (to become short segments 1a) are positioned so that they are adjacent to each other (see Fig. 12). Incidentally, Fig. 9 is a view schematically showing a step of piling up honeycomb segments; Fig. 10 is a perspective view schematically showing an embodiment of the honeycomb segments laminate; Fig. 11 is a schematic front view of en embodiment of the plugged honeycomb structure of the present invention when viewed from the direction of formation of cut-away portion; and Fig. 12 is a schematic front view of other embodiment of the plugged honeycomb structure of the present invention when viewed from the direction of formation of cut-away portion. In Fig. 11 and Fig. 12, cell 5, partition wall 6 and plugged portion 25 are omitted for the convenience of drawing.

Then, the honeycomb segments laminate 30 obtained is subjected to periphery processing as necessary, and the portion (to become a cut-away portion) of the honeycomb segment 1 (to be converted to a short segment 1a) (the portion is an end face of the honeycomb segment 1, at which deep plugged portions have been formed) and part of the bonding material layers 3 in contact with the portion (to become a cut-away portion) are cut using an end mill 26 so that deep plugged portions 24 remain at a desired depth, to form a cut-away portion 2 and obtain a desired plugged honeycomb structure 20. In such a production process, the technique used in the conventional production process for plugged honeycomb structure 10 can be used for the operation of bonding to periphery processing. In this case, since the cutting by end mill 26 is conducted along the bonding material layers 3, problems such as breakage of honeycomb segment 1 during cutting, reduction in strength of honeycomb segments 1 (1a and 1b) after cutting, and the like can be prevented effectively.

According to the process for producing a plugged honeycomb structure, of the present invention, there can be obtained a plugged honeycomb structure 20 having a cut-away portion at a desired position in a desired size. This plugged honeycomb structure 20, when used as a DPF 8, suppresses erosion in a limited space in purification apparatus, is usable also in a container of special shape, and exhibits various effects as a filter for being mounted on a vehicle. Further, according to the process for producing a plugged honeycomb structure 20, of the present invention, there can be obtained a plugged honeycomb structure which is low in the reduction in purification ability and strength, caused by processing for shaping and which is superior in raw material yield and cost.

### [Examples]

The present invention is described in more detail below by way of Examples. However, the present invention is in no way restricted to these examples.

### (Example 1)

There were prepared, as long segments, 15 honeycomb segments whose sectional shape in a direction perpendicular to the axial direction was a square of 35 mm x 35 mm and whose axial direction length was 152 mm. In these long segments, each two adjacent cells had plugged portions at either one end face of honeycomb segment in such a way that one of the cells had a plugged portion at one end face of honeycomb segment and the other cell had a plugged portion at other end face of honeycomb segment, and the depth of each plugged portion was 6 mm. Also, there was prepared, as a honeycomb segment for short segment, a honeycomb segment whose sectional shape in a direction perpendicular to the axial direction was a square of 35 mm x 35 mm and whose axial direction length was 152 mm. In this honeycomb segment for short segment, each two adjacent cells had plugged portions at either one end face of honeycomb segment in such a way that one of the cells had a plugged portion at one end face of honeycomb segment and the other cell had a plugged portion at other end face of honeycomb segments; and the depth of each plugged portion (deep plugged portion) at inlet side end face was 26 mm and the depth of each plugged portion at outlet side end face was 6 mm.

Then, the above-prepared honeycomb segments were laminated by coating a bonding material on the to-be-bonded faces of each honeycomb segment. The laminated 16 honeycomb segments were pressurized from outside to bond them, after which they were dried at 140°C for 2 hours to obtain a honeycomb segments laminate. In this case, the honeycomb segment for short segment was positioned so that it formed a corner of the honeycomb segments laminate.

The periphery of the honeycomb segments laminate obtained was cut into a cylindrical shape. Then, the portion (to become a cut-away portion) of the honeycomb segment for short segment, i.e. the end face of the honeycomb segment for short segment having deep plugged portions, and part of the bonding material layers in contact with the portion (to become a cut-away portion) were cut using an end mill, to form a cut-away portion. In this case, the bonding material layer thickness T1 at the inlet side end face of short segment was 1.5 mm; the bonding material layer T2 at the inlet side end face of each long segment was 0.9 mm; and the difference L between the axial direction length of short segment and the axial direction length of each long segment was 20 mm. Then, a coating material was coated on the outer surface of the honeycomb segments laminate, followed by drying for curing, at 700°C for 2 hours, to obtain a plugged honeycomb structure of 144 mm (diameter) x 152 mm (length).

### (Examples 2 to 8, Comparative Examples 1 to 9)

Plugged honeycomb structures of Examples 2 to 8 and Comparative Examples 1 to 9 were produced in the same manner as in Example 1 except that the depth of the plugged portion (deep plugged portion) at the inlet side end face of honeycomb segment for short segment and the amount of cutting by end mill were changed so that the bonding material layer thickness T1 at the inlet side end face of short segment, the bonding material layer thickness T2 at the inlet side end face of each long segment, the difference L between the axial direction length of short segment and the axial direction length of each long segment, and the shape of bonding material layer were as shown in Table 1. Incidentally, in Comparative example 2, the bonding material layers in contact with the cut-away portion were completely removed by cutting.

The plugged honeycomb structures obtained in Examples 1 to 8 and Comparative Examples 1 to 9 were used as a DPF and subjected to erosion test, pressure loss measurement test and regeneration limit test, according to the following methods.

### (Evaluation)

### Erosion test

In an engine bench test (displacement: 2.0 liters), a DPF was mounted beneath the floor; 10 iron balls of about 1.5 mm diameter as foreign matter were placed in front of the DPF; and a test of NEDC cycle mode was repeated. A PM emission was measured at the end of every 100 cycles. The PM emission was evaluated by measuring a PM weight according to the method specified by Euro. 4 using the number of cycles at which the PM emission exceeded 5 [mg/km] as allowable cycle number. Incidentally, as erosion proceeds, the boring at end face of DPF becomes more striking, and, when plugging is lost, the PM emission shows a sharp increase; therefore, the allowable cycle number can be known by observing the PM emission. From the allowable cycle number, it was calculated a PM allowance distance [km]. The result is shown in Table 1. Incidentally, 1 cycle was 11 km and the target of PM allowance distance was at least 160,000 km.

### Pressure loss measurement test

There was used an apparatus for generating soot (PM) by burner combustion. Soot was deposited on a DPF up to 4 [g/L] under the conditions of a gas flow rate of 2.0 to 3.0 [Nm³/min] and a gas temperature of 150 to 250°C; driving was conducted under the above cycle mode; and a pressure loss before and after DPF at 70 [km/h] was measured. The result is shown in Table 1. Incidentally, the value of 4 [g/L] is a central value of 8 [g/L] which is a set value for ordinary PM deposition limit when a DPF has been mounted on a vehicle, and is used as a standard in examining the effect of pressure loss (caused by PM deposition) on fuel consumption during running. Here, the target of pressure loss was 5.0 kPa or below.

### Regeneration limit test

Soot (PM) was deposited on a DPF. Filter regeneration (combustion of PM) was conducted under such a condition that the maximum temperature inside DPF became 1,100°C or 1,200°C, to examine the generation of cracks. Detection of cracks was reported as "Yes", and no detection of cracks was reported as "No". The result is shown in Table 1. Incidentally, the target of this test was no generation of cracks in DPF, in any of the above temperatures.

**Table 1**

| | T1 [mm] | T2 [mm] | T1/T2 | L [mm] | Shape of bonding material layers | Erosion test | | Pressure loss | Regeneration limit (crack generation) | |
|---|---|---|---|---|---|---|---|---|---|---|
| | | | | | | Cycle number | PM allowance distance [km] | [kPa] | 1,100°C | 1,200°C |
| Example 1 | 1.5 | 0.9 | 1.7 | 30 | Inclined plane having concave and convex | 15,000 | 165,000 | 4.7 | No | No |
| Example 2 | 1.8 | 0.8 | 2.3 | 30 | Inclined plane of convex shape | 14,900 | 163,900 | 4.6 | No | No |
| Example 3 | 1.9 | 0.7 | 2.7 | 30 | Flat inclined plane | 15,100 | 166,100 | 4.5 | No | No |
| Example 4 | 1.6 | 0.3 | 5.3 | 30 | Inclined plane of concave shape | 15,000 | 165,000 | 4.1 | No | No |
| Example 5 | 1.7 | 0.6 | 2.8 | 5 | Inclined plane of concave shape | 14,700 | 161,700 | 4.4 | No | No |
| Example 6 | 0.5 | 0.2 | 2.5 | 30 | Inclined plane of concave shape | 14,700 | 161,700 | 4.2 | No | No |
| Example 7 | 1.3 | 0.8 | 1.6 | 30 | Inclined plane of concave shape | 14,900 | 163,900 | 4.7 | No | No |
| Example 8 | 2.5 | 0.2 | 12.5 | 30 | Inclined plane of concave shape | 14,700 | 161,700 | 4.6 | No | No |
| Comparative Example 1 | 1.9 | 1.9 | 1 | 30 | Flat plane | 14,700 | 161,700 | 5.2 | No | Yes |
| Comparative Example 2 | 1.9 | 0 | - | 30 | No bonding material layer | 14,300 | 157,300 | 5.2 | Yes | Yes |
| Comparative Example 3 | 1.6 | 2 | 0.8 | 30 | Inclined plane having concave and convex | 14,800 | 162,800 | 5.3 | No | Yes |
| Comparative Example 4 | 1.6 | 0.7 | 2.3 | 3 | Inclined plane of concave shape | 14,600 | 159,600 | 4.7 | No | No |
| Comparative Example 5 | 2 | 0.3 | 6.7 | 36 | Inclined plane of concave shape | 14,800 | 162,800 | 4.3 | No | Yes |
| Comparative Example 6 | 0.3 | 0.1 | 3 | 30 | Inclined plane of concave shape | 14,600 | 159,600 | 4.5 | No | No |
| Comparative Example 7 | 5.5 | 1.3 | 4.2 | 30 | Inclined plane of concave shape | 15,500 | 170,500 | 5.1 | No | No |
| Comparative Example 8 | 1.8 | 1.5 | 1.2 | 30 | Inclined plane of concave shape | 15,000 | 165,000 | 5.1 | No | No |
| Comparative Example 9 | 3.5 | 0.1 | 35 | 30 | Inclined plane of concave shape | 14,900 | 163,900 | 4.7 | No | Yes |

The following matters are clear from Table 1.

The pressure loss exceeded 5.0 kPa which was the target of pressure loss, in Comparative Examples 1, 3 and 8 wherein the T1 (which is the bonding material layer thickness at inlet side end face of short segment) and the T2 (which is the bonding material layer thickness at inlet side end face of each long segment adjacent to short segment) do not satisfy 1.5≦T1/T2. Also, cracks appeared at 1,200°C in the regeneration limit test, in Comparative Example 9 not satisfying T1/T2≦30. Meanwhile, in Examples 1 to 8 satisfying 1.5≦T1/T2≦30, the pressure loss target of 5.0 kPa or below was achieved and further the target of PM allowance distance of at least 160,000 km was achieved; therefore, the turbulent flow of exhaust gas and erosion were suppressed effectively. Also, in Comparative Example 2 wherein the bonding material layers adjacent to the cut-away portion were removed completely, the pressure loss exceeded 5.0 kPa; the target of PM allowance distance of at least 160,000 km was not achieved; moreover, cracks appeared at 1,100°C which was the target of regeneration limit test. From these results, it is preferred that T1/T2 satisfies 1.5 ≦T1/T2≦30.

In Examples 1 and 7 wherein T1/T2 was in a range of 1.5 inclusive to 2.0 exclusive, the pressure loss was within the allowable limit but slightly high at 4.7 kPa; in Comparative Example 8 wherein T1/T2 was smaller than 1.5, the pressure loss was higher than that of Examples 1 and 7. Meanwhile, in Example 8 wherein T1/T2 exceeded 10, the pressure loss was within the allowable range but was slightly high at 4.6 kPa; in Comparative Example 9 wherein T1/T2 was 35, the pressure loss was higher than that of Example 8. From these results, it is more preferred that T1/T2 satisfies 2.0≦T1/T2≦10.

The PM allowance distance was short in Comparative Example 6 wherein T1 (the thickness of each bonding material layer at inlet side end face of short segment) was smaller than 0.5 mm, and the pressure loss was high in Comparative Example 7 wherein T1 exceeded 5 mm. From these, it is preferred that T1 satisfies 0.5 mm≦T1≦5 mm.

The PM allowance distance was short in Comparative Example 4 wherein the distance L between the axial direction length of short segment and the axial direction length of each long segment was smaller than 5 mm, and the regeneration limit was low in Comparative Example 5 wherein L exceeded 35 mm. From these, it is preferred that L satisfies 5 mm≦L≦35 mm.

Comparison of Examples 1 to 4 indicates that the absence of concave or convex in the inclined plane of bonding material layer can give larger reduction in pressure loss and that an inclined plane of concave shape can give larger reduction in pressure loss than an inclined plane of convex shape or a flat inclined plane.

The plugged honeycomb structure of the present invention can be preferably used as a DPF which enables space saving and suppresses erosion, in an exhaust gas purification apparatus. According to the process for producing a plugged honeycomb structure of the present invention, there can be easily produced a plugged honeycomb structure having a desired end shape. The present plugged honeycomb structure and the present process for production thereof have high industrial applicability.

### [Explanation of Numerical Symbols]

1: honeycomb segment; 1a: short segment, 1b: long segment, 2: cut-away portion, 3: bonding material layer, 4: inclined plane, 5: cell, 6: partition wall, 8: DPF, 9: honeycomb catalyst structure, 10, 10a, 10b, 20: plugged honeycomb structure, 11, 11a, 11b: inlet side end face, 12: outlet side end face, 13: foreign matter-capturing pocket, 14: corner of cut-away portion, 15: container, 24: deep plugged portion, 25: plugged portion, 26: end mill, 30: honeycomb segments laminate, 110, 120, 130: exhaust gas purification apparatus

## Claims

1. A plugged honeycomb structure (20) for diesel particulate filter, formed by integrally bonding, via bonding material layers (3), a plurality of honeycomb segments (1) each having a plurality of cells (5) surrounded by porous partition walls (6) and functioning as a flow path, in which honeycomb segments (1) each two adjacent cells (5) are plugged at either one end face of honeycomb segment (1) in such a way that one of the cells (5) is plugged at one end face (11) of honeycomb segment (1) and the other cell (5) is plugged at other end face (12) of honeycomb segment (1),
in which honeycomb structure (20),
of the plurality of honeycomb segments (1), a particular honeycomb segment (1a) is constituted so that its axial direction length is shorter than the axial direction length of residual honeycomb segments (1b), whereby a cut-away portion (2) composed of one entire honeycomb segment (1) is formed at the periphery of the inlet side end face (11) of the plugged honeycomb structure (20),
the bonding material layers (3) which bond the particular honeycomb segment of short segment (1a) and the residual honeycomb segments of long segments (1b) adjacent to the short segment (1a) are formed so as to be continuously present from the inlet side end face of short segment (11a) to the inlet side end face of long segments (11b),
in the bonding material layers (3) bonding the short segment (1a) and the adjacent long segments (1b), T1 which is the bonding material layer (3) thickness at the inlet side end face (11a) of the short segment (1a), T2 which is the bonding material layer (3) thickness at the inlet side end face (11b) of the adjacent long segments (1b), and T which is the bonding material layer (3) thickness from the inlet side end face (11a) of the short segment (1a) to the inlet side end face (11b) of the adjacent long segments (1b) satisfy T1≧T≧T2, 0.5 mm≦T1≦5 mm, and 1.5≦T1/T2≦30, and
the difference L between the axial direction length of short segment (1a) and the axial direction length of long segments (1b) satisfies 5 mm≦L≦35 mm.

2. The plugged honeycomb structure (20) according to Claim 1, wherein the T is reduced gradually from the inlet side end face (11a) of short segment (1a) toward the inlet side end face (11b) of long segments (1b) and thereby the plane of the bonding material layer (3) contacting with the cut-away portion (2) forms an inclined plane.

3. The plugged honeycomb structure (20) according to Claim 1 or 2, wherein the inclined plane has a flat shape free from concave or convex or a shape which is concave toward the direction of long segments (1b).

4. A process for producing a plugged honeycomb structure (20) set forth in any of Claims 1 to 3, which comprises
a step for formation of honeycomb segments laminate (30), of laminating and bonding a honeycomb segment (1) to be converted to the short segment (1a) and the long segments (1b) via the bonding material layers (3) to obtain a honeycomb segments laminate (30),
a step for periphery processing, of processing the periphery of the honeycomb segments laminate (30), and
a step for formation of cut-away portion (2), of cutting a portion to become a cut-away portion (2) of the honeycomb segment (1) to be converted to the short segment (1a) and part of the bonding material layers (3) in contact with the portion to become a cut-away portion (2), to form a cut-away portion (2);
wherein the step for formation of the cut-away portion (2) is performed such that the bonding material layers (3) which bond the particular honeycomb segment of short segment (1a) and the residual honeycomb segments of long segments (1b) adjacent to the short segment (1a) are formed so as to be continuously present from the inlet side end face (11a) of short segment (1a) to the inlet side end face (11b) of long segments (1b);
and such that in the bonding material layers (3) bonding the short segment (1a) and the adjacent long segments (1b), T1 which is the bonding material layer (3) thickness at the inlet side end face (11a) of the short segment (1a), T2 which is the bonding material layer (3) thickness at the inlet side end face (11b) of the adjacent long segments (1b), and T which is the bonding material layer (3) thickness from the inlet side end face (11a) of the short segment (1a) to the inlet side end face (11b) of the adjacent long segments (1b) satisfy T1≧T≧T2, 0.5 mm≦T1≦5 mm, and 1.5≦T1/T2≦30, and
the difference L between the axial direction length of short segment (1a) and the axial direction length of long segments (1b) satisfies 5 mm≦L≦35 mm.

## Patentansprüche

1. Verschlossene Wabenstruktur (20) für Dieselpartikelfilter, die durch stoffschlüssiges Verbinden über Verbindungsmaterialschichten (3) ausgebildet wird, wobei eine Vielzahl von Wabensegmenten (1) jeweils eine Vielzahl von Zellen (5) aufweist, welche von porösen Trennwänden (6) umgeben sind und als ein Strömungspfad wirken, worin in den Wabenstrukturelementen (1) jeweils zwei aneinander angrenzende Zellen (5) an jeweils einer Endfläche des Wabensegments (1) derart verschlossen sind, dass eine der Zellen (5) an einer Endfläche (11) des Wabensegments (1) verschlossen ist, und die andere Zelle (5) an der anderen Endfläche (12) des Wabensegments (1) verschlossen ist,
worin in der Wabenstruktur (20) aus der Vielzahl von Wabensegmenten (1) ein bestimmtes Wabensegment (1a) derart beschaffen ist, dass seine axiale Richtungslänge kürzer als die axiale Richtungslänge der übrigen Wabensegmente (1b) ist, wodurch ein weggeschnittener Abschnitt (2), der sich aus einem vollständigen Wabensegment (1) zusammensetzt, am Umfang der Einlassseitenendfläche (11) der verschlossenen Wabenstruktur (20) ausgebildet ist,
worin die Verbindungsmaterialschichten (3), die das bestimmte Wabensegment des kurzen Segments (1a) und die übrigen Wabensegmente der an das kurze Segment angrenzenden, langen Segmente (1b) haftschlüssig verbinden, derart ausgebildet sind, dass diese von der Einlassseitenendfläche des kurzen Segments (11a) bis zur Einlassseitenendfläche der langen Segmente (11b) kontinuierlich vorhanden sind,
worin in den Verbindungsmaterialschichten (3), die das kurze Segment (1a) und die angrenzend angeordneten, langen Segmente (1b) haftschlüssig verbinden, T1, das die Verbindungsmaterialschicht (3) -Dicke an der Einlassseitenendfläche (11a) des kurzen Segments (1a) ist, T2, das die Verbindungsmaterialschicht (3) - Dicke an der Einlassseitenendfläche (11b) der angrenzend angeordneten, langen Segmente (1b) ist, und T, das die Verbindungsmaterialschicht (3) -Dicke von der Einlassseitenendfläche (11a) des kurzen Segments (1a) bis zur Einlassseitenendfläche (11b) der angrenzend angeordneten, langen Segmente (1b) ist, T1≧T≧T2, 0,5 mm≦T1≦5 mm, und 1,5≦T1/T2≦30 erfüllen, und
die Differenz L zwischen der axialen Richtungslänge des kurzen Segments (1a) und der axialen Richtungslänge der langen Segmente (1b) 5 mm≦L≦35 mm erfüllt.

2. Verschlossene Wabenstruktur (20) gemäß Anspruch 1, worin das T von der Einlassseitenendfläche (11a) des kurzen Segments (1a) in Richtung der Einlassseitenendfläche (11b) der langen Segmente (1b) allmählich reduziert wird, und dadurch die Ebene der Verbindungsmaterialschicht (3), die mit dem weggeschnittenen Abschnitt (2) in Berührung ist, eine geneigte Ebene bildet.

3. Verschlossene Wabenstruktur (20) gemäß Anspruch 1 oder 2, worin die geneigte Ebene eine flache Form aufweist, die frei von einer konkaven oder konvexen, oder einer Form, die in Richtung der langen Segmente (1b) konkav ist, ist.

4. Verfahren für das Herstellen einer verschlossenen Wabenstruktur (20), die in einem der Ansprüche 1 bis 3 dargelegt wird, das folgende Schritte umfasst:
einen Schritt für das Ausbilden eines Wabensegmentelaminats (30) des Laminierens und haftschlüssigen Verbindens eines Wabensegments (1), um über die Verbindungsmaterialschichten (3) in das kurze Segment (1a) und die langen Segmente (1b) umgewandelt zu werden, um ein Wabensegmentlaminat (30) zu erzielen,
einen Schritt für die Umfangsbearbeitung des Bearbeitens des Umfangs des Wabensegmentelaminats (30), und
einen Schritt für die Ausbildung des weggeschnittenen Abschnitts (2) des Abschneidens eines Abschnitts, um ein weggeschnittener Abschnitt (2) des Wabensegments (1) zu werden, um in das kurze Segment (1a) umgewandelt zu werden, und eines Teils der Verbindungsmaterialschichten (3), die in Berührung mit dem Abschnitt sind, der ein weggeschnittener Abschnitt (2) werden soll, um einen weggeschnittenen Abschnitt (2) auszubilden;
worin der Schritt für das Ausbilden des weggeschnittenen Abschnitts (2) so ausgeführt wird, dass die Verbindungsmaterialschichten (3), welche das bestimmte Wabensegment des kurzen Segments (1a) und die übrigen Wabensegmente der an das kurze Segment (1a) angrenzenden, langen Segmente (1b) haftschlüssig verbinden, derart ausgebildet sind, dass sie von der Einlassseitenendfläche (11a) des kurzen Segments (1a) bis zur Einlassseitenendfläche (11b) der langen Segmente (1b) kontinuierlich vorhanden sind;
und derart, dass in den Verbindungsmaterialschichten (3), welche das kurze Segment (1a) und die angrenzend angeordneten, langen Segmente (1b) haftschlüssig verbinden, T1, das die Verbindungsmaterialschicht (3) -Dicke an der Einlassseitenendfläche (11a) des kurzen Segments (1a) ist, T2, das die Verbindungsmaterialschicht (3) -Dicke an der Einlassseitenendfläche (11b) der angrenzend angeordneten, langen Segmente (1b) ist, und T, das die Verbindungsmaterialschicht (3) -Dicke von der Einlassseitenendfläche (11a) des kurzen Segments (1a) bis zur Einlassseitenendfläche (11b) der angrenzend angeordneten, langen Segmente (1b) ist, T1≧T≧T2, 0,5 mm≦T1≦5 mm und 1,5≦T1/T2≦30 erfüllen, und
die Differenz L zwischen der axialen Richtungslänge des kurzen Segments (1a) und der axialen Richtungslänge der langen Segmente (1b) 5 mm≦L≦35 mm erfüllt.

## Revendications

1. Structure en nid d'abeille raccordée (20) pour un filtre à particules diesel, formée par une liaison en un seul bloc, via des couches de matériau de liaison (3), d'une pluralité de segments en nid d'abeille (1) ayant chacun une pluralité de cellules (5) entourées par des parois de séparation poreuses (6) et fonctionnant comme un trajet d'écoulement, dans laquelle des segments en nid d'abeille (1) de chacune de deux cellules adjacentes (5) sont raccordés à une face d'extrémité d'un segment en nid d'abeille (1) de telle sorte qu'une des cellules (5) est raccordée à une face d'extrémité (11) du segment en nid d'abeille (1) et l'autre cellule (5) est raccordée à l'autre face d'extrémité (12) du segment en nid d'abeille (1), structure en nid d'abeille (20) dans laquelle,
parmi la pluralité de segments en nid d'abeille (1), un segment en nid d'abeille particulier (1a) est constitué de sorte que sa longueur de direction axiale est plus courte que la longueur de direction axiale des segments en nid d'abeille résiduels (1b), de sorte qu'une partie découpée (2) composée d'un segment en nid d'abeille entier (1) est formée à la périphérie de la face d'extrémité de côté d'entrée (11) de la structure en nid d'abeille raccordée (20),
les couches de matériau de liaison (3) qui lient le segment en nid d'abeille particulier d'un court segment (1a) et les segments en nid d'abeille résiduels de longs segments (1b) adjacents au court segment (1a) sont formées afin d'être continuellement présents depuis la face d'extrémité de côté d'entrée du court segment (11a) jusqu'à la face d'extrémité de côté d'entrée des longs segments (11b),
dans les couches de matériau de liaison (3) liant le court segment (1a) et les longs segments adjacents (1b), T1, qui est l'épaisseur de la couche de matériau de liaison (3) au niveau de la face d'extrémité de côté d'entrée (11a) du court segment (1a), T2, qui est l'épaisseur de la couche de matériau de liaison (3) au niveau de la face d'extrémité de côté d'entrée (11b) des longs segments adjacents (1b), et T, qui est l'épaisseur de la couche de matériau de liaison (3) depuis la face d'extrémité de côté d'entrée (11a) du court segment (1a) jusqu'à la face d'extrémité de côté d'entrée (11b) des longs segments adjacents (1b) satisfont T1≥T≥T2, 0,5 mm≤T1≤5 mm, et 1,5≤T1/T2≤30, et
la différence L entre la longueur de direction axiale du court segment (1a) et la longueur de direction axiale de longs segments (1b) satisfait 5 mm≤L≤35 mm.

2. Structure en nid d'abeille raccordée (20) selon la revendication 1, dans laquelle T est réduite graduellement depuis la face d'extrémité de côté d'entrée (11a) du court segment (1a) vers la face d'extrémité de côté d'entrée (11b) de longs segments (1b), et ainsi le plan de la couche de matériau de liaison (3) venant en contact avec la partie découpée (2) forme un plan incliné.

3. Structure en nid d'abeille raccordée (20) selon la revendication 1 ou 2, dans lequel le plan incliné a une forme plate libre parmi concave ou convexe, ou une forme qui est concave vers la direction des longs segments (1b).

4. Procédé pour produire une structure en nid d'abeille raccordée (20) selon l'une quelconque des revendications 1 à 3, qui comprend
une étape de formation d'un stratifié de segments en nid d'abeille (30), consistant à stratifier et à lier un segment en nid d'abeille (1) pour conversion en le court segment (1a) et les longs segments (1b) via les couches de matériau de liaison (3) pour obtenir un stratifié de segments en nid d'abeille (30),
une étape de traitement de périphérie, pour traiter la périphérie du stratifié de segments en nid d'abeille (30), et
une étape de formation d'une partie découpée (2), consistant à découper une partie pour qu'elle devienne une partie découpée (2) du segment en nid d'abeille (1) destiné à être converti en le court segment (1a) et une partie des couches de matériau de liaison (3) en contact avec la partie destinée à devenir une partie découpée (2), pour former une partie découpée (2) ;
dans laquelle l'étape de formation de la partie découpée (2) est effectuée de telle sorte que les couches de matériau de liaison (3) qui lient le segment en nid d'abeille particulier du court segment (1a) et les segments en nid d'abeille résiduels de longs segments (1b) adjacents au court segment (1a) sont formées afin d'être continuellement présentes depuis la face d'extrémité de côté d'entrée (11a) du court segment (1a) jusqu'à la face d'extrémité de côté d'entrée (11b) des longs segments (1b) ;
et de telle sorte que dans les couches de matériau de liaison (3) liant le court segment (1a) et les longs segments adjacents (1b), T1, qui est l'épaisseur de la couche de matériau de liaison (3) au niveau de la face d'extrémité de côté d'entrée (11a) du court segment (1a), T2, qui est l'épaisseur des couches de matériau de liaison (3) au niveau de la face d'extrémité de côté d'entrée (11b) des longs segments adjacents(1b), et T, qui est l'épaisseur des couches de matériaux de liaison (3) depuis la face d'extrémité de côté d'entrée (11a) du court segment (1a) jusqu'à la face d'extrémité de côté d'entrée (11b) des longs segments adjacents (1b) satisfont T1≥T≥T2, 0,5 mm≤T1≤5 mm, et 1,5≤T1/T2≤30, et
la différence L entre la longueur de direction axiale du court segment (1a) et la longueur de direction axiale de longs segments (1b) satisfait 5 mm≤L≤35 mm.
